# EUROPEAN PATENT APPLICATION

(11) **EP 1 772 992 A1**
(43) Date of publication of application: **11.04.2007**
(21) Application number: 06019296.0
(22) Date of filing: 15.09.2006
(51) Int. Cl.: H04L 12/24

(54) **Apparatus and method for analysing packet data streams**

(30) Priority: 06.10.2005 US 723993 P; 08.09.2006 US 530082
(71) Applicant: Alcatel Lucent, 75008 Paris (FR)
(72) Inventor: Talley, James, W., TX 75035 Frisco (US); Kim, Taeho, TX 75248 Dallas (US); Gonzales, Gerardo, A., TX 75023 Plano (US)
(74) Representative: Schäfer, Wolfgang

(57) **Abstract**

An apparatus and method for analyzing data streams in a data transmission environment. In one embodiment, the method involves: capturing data from at least one data stream at two or more taps associated with a system under test(SUT); filtering the captured data to extract data packets belonging to one or more data types; analyzing extracted data packets of each data type using packet header and payload information of the extracted data packets; and outputting results obtained from analyzing the extracted data packets.

## Description

### BACKGROUND OF THE INVENTION

### Technical Field of the Invention

The present invention generally relates to data traffic analyzers. More particularly, and not by way of any limitation, the present invention is directed to an apparatus and method for analyzing data streams involving packetized traffic.

### Description of Related Art

Testing packet-oriented telecommunication devices that implement proprietary protocols, using off-the-shelf testing tools, is a difficult task. Existing solutions, however, are not only inflexible in generating statistics on a user-selectable portion of the data frames being monitored, but are also incapable of analyzing multiple types of data traffic streams.

### SUMMARY OF THE INVENTION

Embodiments of the present disclosure are directed an apparatus, method and associated program code for analyzing data streams in a packet data transmission environment. In one embodiment, the claimed method includes: capturing data from at least one data stream at two or more taps associated with a system under test (SUT); filtering the captured data to extract data packets belonging to one or more data types; analyzing extracted data packets of each data type using packet header and payload information of the extracted data packets; and outputting results obtained from analyzing the extracted data packets. Preferably, the data analysis involves "deep-inspection" of packets, cells, frames or other data units, using information at Layer-3 or a higher layer of a multi-layer Open Systems Interconnection (OSI) architecture implemented with respect to the data transmission environment in which the SUT is disposed.

Another embodiment is directed to a computer readable medium having instructions thereon which, when executed by a computer, perform the steps involved in the foregoing method. In a further embodiment, an apparatus for analyzing data streams includes: means for capturing data from at least one data stream at two or more taps associated with a SUT; means for filtering the captured data to extract data packets belonging to one or more data types; means for analyzing extracted data packets of each data type using packet header and payload information of the extracted data packets; and means for outputting results obtained from analyzing the extracted data packets.

In yet another embodiment, the present disclosure is directed to a multi-port packet data analyzer, comprising: a plurality of network interface card (NIC) drivers, each operating to receive a packet data stream from a hardware port of a SUT; a plurality of packet capture filters corresponding to the plurality of NIC drivers; and a plurality of software modules, each for performing a particular analysis on data packets extracted from a packet data stream based on content of the data packets, wherein the software modules are executable as multi-threaded objects in a processor and associated Operating System (OS) environment, each of the software modules having an interface to a corresponding packet capture filter and associated buffer disposed in the OS's kernel.

### BRIEF DESCRIPTION OF THE DRAWINGS

A more complete understanding of the present invention may be had by reference to the following Detailed Description when taken in conjunction with the accompanying drawings wherein:
FIG. 1 depicts a generalized Ethernet data transmission environment having a system under test (SUT) that may be analyzed by a multi-port packet data analyzer according to an embodiment of the present disclosure;
FIG. 2 depicts another exemplary Ethernet data transmission environment wherein an embodiment of the present disclosure may be implemented;
FIG. 3 depicts a software architecture model of a multi-port packet data analyzer according to an embodiment of the present disclosure;
FIG. 4 is a flowchart relating to a scheme for analyzing data streams in a data transmission environment according to one embodiment;
FIG. 5 depicts a functional block diagram associated with a data flow architecture of a multi-port packet data analyzer according to an embodiment of the present disclosure; and
FIGS. 6-7 and 8A-8B depict various exemplary output formats available with an embodiment of a multi-port packet data analyzer.

### DETAILED DESCRIPTION OF THE DRAWINGS

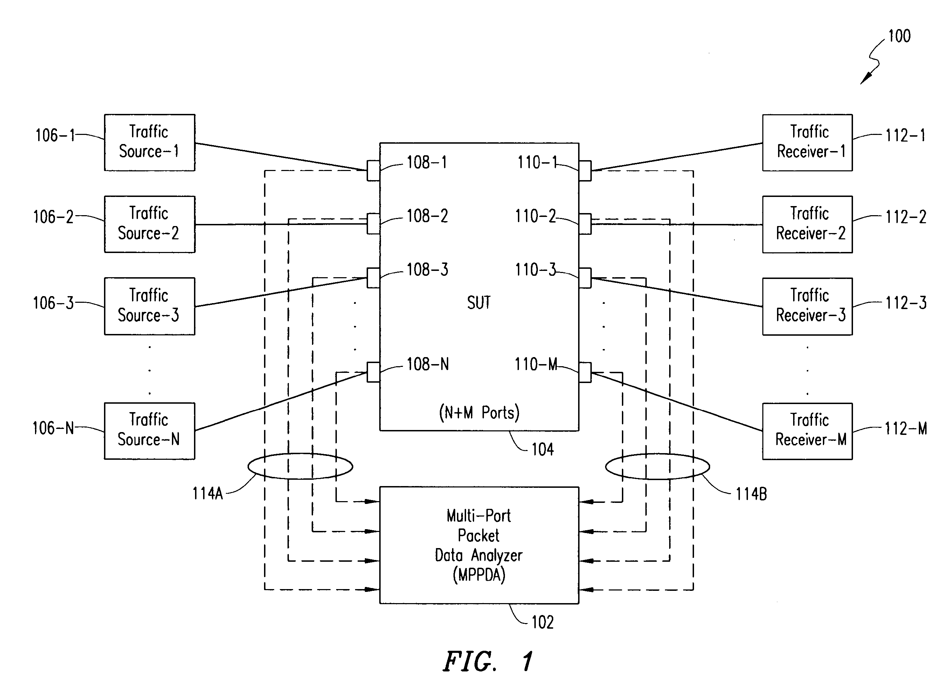

Embodiments of the invention will now be described with reference to various examples of how the embodiments can best be made and used. Like reference numerals are used throughout the description and several views of the drawings to indicate like or corresponding parts, wherein the various elements are not necessarily drawn to scale. Referring now to FIG. 1 in particular, shown therein is a generalized Ethernet data transmission environment 100 having a system under test (SUT) 104 that may be analyzed by a multi-port packet data analyzer 102 according to an embodiment of the present disclosure. At the outset, it should be realized that the data transmission environment 100 is exemplary of any known or heretofore unknown network arrangement employing Ethernet technology, e.g., local area networks (LANs), metro networks, wide area networks (WANs), core networks, and the like, wherein data transmission is effectuated by means of Ethernet frames having variable sizes and fields that are operable to carry a variety of payloads. By way of generalization, SUT 104 is operable to receive and transmit multiple data streams with encapsulated data packets having headers at different layers in accordance with applicable OSI model architecture. As illustrated in FIG. 1, a plurality of input ports 108-1 through 108-N are operable to receive packetized data streams from a corresponding number of traffic sources 106-1 though 106-N, which are provided to a plurality of output ports 110-1 through 110-M of SUT 104 for transmission to a corresponding number of traffic receivers 112-1 through 112-M. The data streams can comprise data traffic of a number of types, i.e., with different content, such as audio, Internet Protocol (IP) video, Voice over IP (VoIP), TCP/IP data, Microsoft RTP Video Stream (MSRTP) data, and User Datagram Protocol (UDP) data, etc. In one implementation, SUT 104 may be any Ethernet equipment with its input and output ports logically partitioned into a plurality of virtual LANs (VLANs).

The multi-port packet data analyzer (MPPDA) 102 of the present disclosure is operable to capture the data streams at any number of input ports as well as any number of output ports of SUT 104 for performing various tests and analyses based on the content of the packets. Preferably, the data analysis methodology involves "deep-inspection" of packets, cells, frames or other data units, using information at Layer-3 or a higher OSI layer, preferably the header information as well as a specified field of the payload. By way of illustration, reference numerals 114A and 114B refer to a plurality of tapping paths with respect to the input and output ports of SUT 104 whose data streams are to be analyzed as will be set forth below.

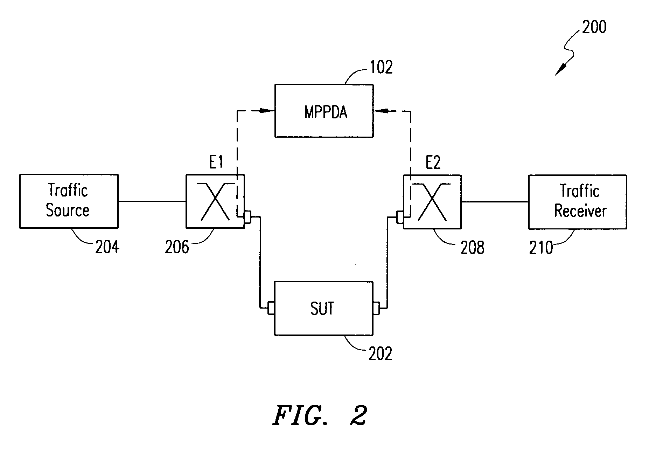

FIG. 2 depicts another exemplary Ethernet data transmission environment 200 wherein an embodiment of the present disclosure may be implemented. A SUT 202 is coupled to a first Ethernet switch (E1) 206 via SUT's input port and to a second Ethernet switch (E2) 208 via SUT's output port. E1 and E2 may also be implemented in a single Ethernet switch provided they belong to separate VLAN domains. As before, a generalized traffic source 204 is coupled to the Ethernet switch 206 on the transmission side and a generalized traffic receiver 210 is coupled to the Ethernet switch 208 on the reception side. MPPDA 102 is operable to tap the incoming data stream relative to SUT 202 at a suitable tap point or port disposed in the Ethernet switch 206. Likewise, the outgoing data stream of SUT 202 may be tapped at a tap disposed in the Ethernet switch 208.

Preferably, MPPDA 102 is implemented as a universal data traffic analyzer application on a general-purpose computer that includes hardware for sniffing Ethernet frames or proprietary data frames to gather statistics and measurements on any interested field in each frame. Further, the functionality of the application is flexible such that it is capable of monitoring one or multiple physical ports, and within each physical port it has the capability to monitor multiple data streams. When analyzing multiple ports or multiple data streams, the data traffic analyzer application has the capability to compare and correlate the results based on multi-port analysis of incoming and outgoing data at a SUT. Although, the data analyzer entity may be provided as a software application as will be described in detail below, some functionality can be implemented in software, hardware, or as a hardware component (e.g., Field Programmable Gate Array (FPGA) or Application Specific Integrated Circuit (ASIC)). In addition, where the data streams are tapped at multiple locations of a data stream, the data analyzer application is capable of monitoring the packet flow over a segment of the data path, examining and correlating various in-line data parameters for performing a robust statistical analysis. In a further variation, multiple data analyzers may be provided to effectuate data monitoring over a larger network portion in a coordinated manner, wherein each analyzer may communicate the statistical and measurement results to a remote monitoring station. For example, a monitoring system having multiple analyzers in an IPTV environment is described in detail in the following commonly owned co-pending patent application(s): (i) "INTEGRATED IP DSLAM TEST MONITOR," filed on filed on June 28, 2006, Application No.: 11/427,076, (Alcatel Docket No. 139482), in the name(s) of: Donald Zriny, Frederick Skoog, James W. Talley, Jr., and Gerardo Gonzalez, which has been incorporated by reference hereinabove.

In a presently preferred exemplary embodiment, the data analyzer application is provided as a multi-threaded tool, written in a high-level language (e.g., in C language) that transforms a standard workstation or a personal computer having a plurality of Ethernet network interface cards (NIC) into a data traffic analyzer. In one implementation, the tool may utilize open source utilities (e.g., Pcap or WinPcap) for packet capture and network analysis. It should be appreciated that the combination of using high-level language and open source library makes the software application portable to virtually any Operating System (OS) platform (e.g., Windows, Unix, Linux, any Real-Time Operating System, etc.) and hardware (x86 based PC, Sun Workstation, etc.) combination.

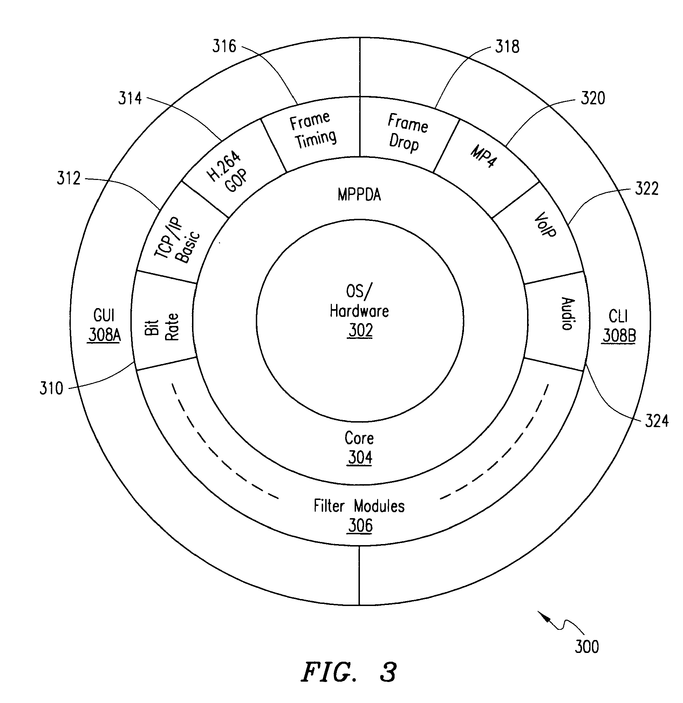

FIG. 3 is a software architectural model 300 of a multi-port packet data analyzer such as, e.g., MPPDA 102, according to an embodiment of the present disclosure. The exemplary architecture 300 is preferably provided to be user-programmable and configurable in order to support analysis of different data types based on the testing requirements of a particular data transmission environment. As illustrated, the architecture 300 comprises multiple hierarchical layers having appropriate interface software in between. At the bottom (or, center), an OS/processor/hardware layer 302 forms the host machine platform operable to execute the data analyzer application. As alluded to previously, this layer can be any general-purpose computer, with known processor and OS combinations, as well as suitable NIC hardware. A core layer 304 is operable to implement suitable lower interfaces and common functions that can be used from an upper filter module layer 306. Accordingly, core layer 304 preferably comprises packet capture module interfaces, thread management, exception handling, packet reception, and event notification to upper layer, etc. The filter module layer 306 comprises one or more filters that are programmed and plugged in by the user according to the specific testing requirements. In other words, a filter module can be inserted or removed from the data analyzer application according to the test requirements and/or test equipment's limitations, thereby rendering the data analysis scheme of the present disclosure extremely versatile. Those skilled in the art will recognize that the test equipment's limitations may typically depend on the characteristics of platform that the MPPDA application is running on, including, e.g., processor speed, processor bus input/output (I/O) bandwidth, I/O device speed (NIC, hard disk, display refresh rate, etc.), and the like. Once specific modules are selected, the filter modules along with core layer software and user interface components (e.g., a graphical user interface or GUI 308A and/or a command line interface or CLI 308B) are compiled and built into a software application (which may be embodied in a computer program product or suitable computer readable media) that can be executed on a certain platform.

Each filter module preferably runs on its own thread for faster and independent processing. Upon receiving a packet, an event notice from packet capture library (e.g., Pcap) may be generated and forwarded to the core layer 304 and the event, along with the packet information, is then forwarded to one or more filter modules that are subscribed to packet reception events. The appropriate filter module(s) notified of the event then look into user-selected fields in the frame (packet). By way of example, the fields inspected may include certain predetermined depth in the payload, as well as the specified standard packet header fields. Once a filter module recognizes a packet, the statistics are updated accordingly. Preferably, the filter module generates and sends individual or aggregated statistics either to a suitable user interface or logs the same into its related statistics file(s).

By way of exemplary implementation, a plurality of modules are illustrated in FIG. 3: a bit rate analysis module 310, a TCP/IP traffic analysis module 312, a Group of Pictures (GOP) or H.264 analysis module 314, a frame timing analysis module 316, a frame drop analysis module 318, an MP4 analysis module 320, a VoIP analysis module 322, and an audio analysis module 324. It may be noted that some filter modules have dependencies on other basic module(s), e.g., H.264 analysis module 314 depends on frame drop analysis module 318, which in turn further depends on TCP/IP traffic analysis module 312. Preferably, the module dependencies are checked during the MPPDA application build process. For basic traffic analysis, the MPPDA application tool is capable of monitoring frame types within each data stream and generating statistics on each frame type such as frame counts and frame lengths in real-time. Basic traffic analysis is also operable to provide instantaneous bit-rate on individual streams, instantaneous bit-rate on total streams, real-time comparisons of the input and output streams to indicate frame loss, and real-time frame loss percentage.

Bit-rate analysis module 310 uses the statistics obtained from basic traffic analysis and adds timing information, for example, based on a common time base provided by the host hardware. Preferably, bit-rate analysis calculates the differences of frame counts and frame lengths for a given time sample, then over a period of multiple time samples, details the frame arrival time characteristics and bit arrival time characteristics. Further, bit-rate analysis can generate reports on each stream or an aggregate report of multiple streams on a physical port.

With respect to video streams, Group of Pictures (GOP) analysis uses the information generated by bit-rate analysis and records the details of each GOP structure within a stream in addition to the inter-GOP arrival time. GOP analysis preferably uses an anchor frame (I-frame) for delineation in a video stream. Once an I-frame is detected, the details of the GOP are recorded until another I-frame is detected. In one exemplary implementation, the details of a GOP analysis comprise: the total GOP size, in number of frames and byte length, and the frame size in bytes and frame counts for each unique frame type within a GOP. Additional details may also contain inter-arrival time (ms) of each GOP and the GOP structure, which records the arrival order of the unique frame types within the GOP. GOP analysis module 314 can be adapted to analyze other types of traffic having a particular traffic pattern. Examples of traffic that falls in this category are H.264, MP4, MSTV, IPTV, etc.

Frame timing analysis module 316 may be provided as an extension of bit-rate analysis that records the inter-arrival time of a unique frame type for various types within a stream. Frame arrival analysis is operable to generate reports for each stream or an aggregate of streams. With post processing, this data may be used to estimate buffer utilization at different data rates.

Frame drop analysis module 318 is operable to provide an indication of frame drops by comparing the sequence number of the input and output streams and marking the sequence number of the dropped frame. As part of this analysis, consecutive frame drops are recorded for each frame type within a stream. This data may be used to generate histograms of successive frame drops of a particular frame type. Frame drop analysis also detects reordering on the input and output streams by flagging the reordered sequence number.

Based on the foregoing, it should be appreciated that the MPPDA application of the present disclosure is operable to analyze different data types in multiple data/packet streams, defined herein as multiple packets flowing from a traffic source to a designated receiver. The application taps the packet streams via a physical port, which is typically a physical interface operable to transmit and receive packets. Although multiple packet streams may be transported on the physical ports, the MPPDA application is flexible such that it is capable of monitoring one or more physical ports with multiple streams and is programmable to support various data traffic types as described above. Furthermore, when analyzing a SUT using multiple ports, the MPPDA application has the capability to compare results of the ports to gain understanding with respect to a data stream's packet flow behavior via the SUT.

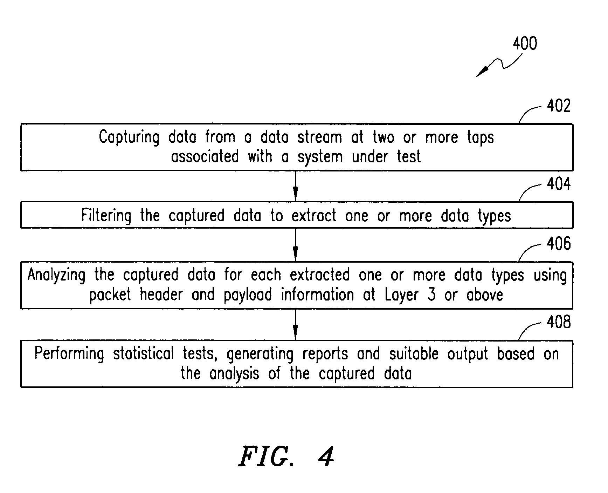

Referring now to FIG. 4, depicted therein is a flowchart relating to a scheme 400 for analyzing data streams in a data transmission environment according to one embodiment. At block 402, data from at least one data stream is captured at two or more taps associated with a SUT disposed in the data transmission environment, the SUT being any network equipment operable to transport packetized data, including a variety of interfaces such as host uplink interfaces, expansion shelves interfaces, network termination card and line card interfaces, and the like. Upon filtering the captured data to extract data packets belonging to one or more data types (preferably based on the content of the payloads involved, for example) (block 404), the captured and filtered data is provided to appropriate application modules for analyzing the data using deep-inspection techniques including examination of packet header and payload information at Layer 3 or higher OSI layers (block 406). In one exemplary implementation, various statistical analyses may be performed optionally with respect to the results obtained from the application analysis modules. Further, output reports in a number of user-selectable formats, such as charts, graphs, tables, Markup Language stylesheets, etc. may be generated (block 408). As alluded to hereinabove, any and/or all of the foregoing blocks may be implemented in software, hardware, firmware, or in any suitable combination thereof.

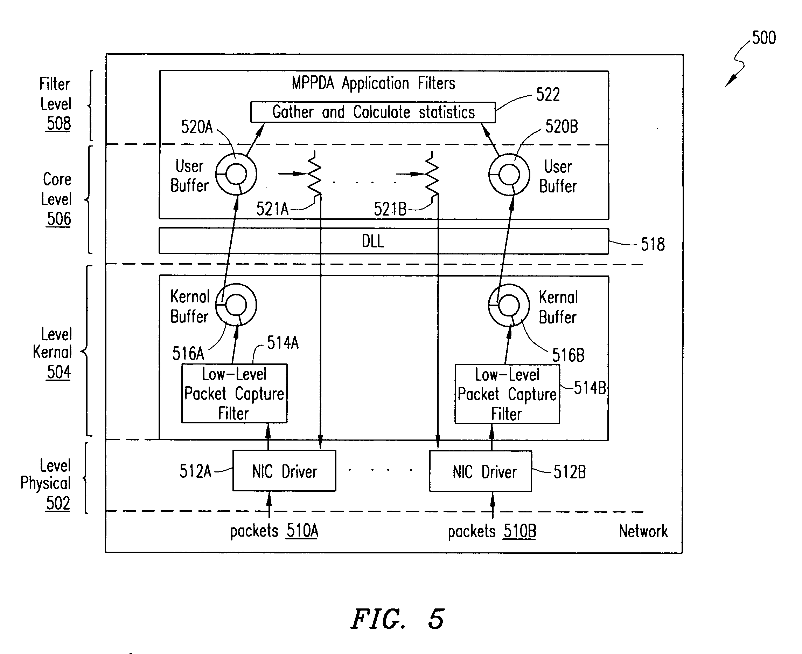

FIG. 5 is a functional block diagram associated with a data flow architecture model 500 of a multi-port packet data analyzer according to an embodiment of the present disclosure. The exemplary data flow architecture 500 is illustrative of data flow among a physical level 502, a kernel level 504, a core level 506, and an application filter module level 508. At physical level 502 a plurality of NICs and associated drivers, e.g., NIC drivers 512A and 512B, are operable to receive respective data packet streams 510A, 510B. Associated with each driver is a low level capture filter 514A, 514B in kernel space 504, wherein filtered data packets are stored in respective kernel buffers 516A, 516B. A capture dynamic linked library (DLL) interface 518 operating at core level 506 interfaces the kernel buffers 516A, 516B to respective user buffers 520A, 520B. Various application analysis filters or modules described in detail hereinabove are then operable to perform the specified analyses in order to gather and calculate statistics 522.

As alluded to previously, the MPPDA application of the present disclosure is architectured as a multi-threaded software package to enhance performance as well as facilitate user-configurable analysis and outputting. Accordingly, packet captures, real-time display, and analytical computations are executed on separate threads, preferably on a port-by-port basis. In FIG. 5, reference numerals 521A and 521B refer to two illustrative threads with respect to the packet flow received at NIC drivers 512A and 512B, respectively.

In one exemplary implementation, the MPPDA application may be controlled via a craft terminal or by a TCP/IP based client having a GUI that may be implemented in Java. The craft terminal is operable to support a CLI with respect to the MPPDA application, and depending on the type of analysis to be done, the commands can be fairly involved. Table 1A and Table 1B set forth below are illustrative of exemplary MPPDA command usage wherein "vsniff" is the MPPDA application's name in one implementation:

**Table 1A**

| **Operation Usage** | |
|---|---|
| vsniff -s -[v\|x] -r[integer] -d -t[port] -l [filename] - [[b{-g(integer) \|-a} \| i {a} \| f] filename] | |

| **Help Usage** | |
|---|---|
| vsniff -h | |

| **Monitoring Modes** | |
|---|---|
| -s | to manually select the input NIC and output NIC |
| -v | Monitors only one port of the emulator |
| -x | Monitors both input and output ports of emulator |
| -r [integer] | Changes the packet capture rate in ms{20-1000} [default 20ms] |

| **Output Display Modes** | |
|---|---|
| -d | Disables real time updates |
| -t [port] | Enables the external display GUI for TCP socket port {port#} |
| -1 [filename] | Creates log file to save real time test results |

| **Analysis Modes** | |
|---|---|
| -b [filename] | Activates Bit Rate analysis, with a sample rate of -r setting [default 20ms], to a .csv file. Performs bit rate analysis in two modes aggregate mode (-a) or channel mode (default). |
| -g [integer] | Sets Bit Rate Analysis to Perform GOP analysis with an I frame window of {1 to 50} samples [default 22 samples] |
| -i [filename] | Activates Packet Timing Analysis Performs Packet Timing Analysis in two modes aggregate mode (-a) or channel mode (default). |
| -a | Sets Bit Rate Analysis or Packet Interval Analysis to Aggregate Mode |
| -f [filename] | Perform Frame Drop Analysis and Frame Latency Analysis |

**Table 1B**

| **Examples** | |
|---|---|
| vsniff -x -1 vdump -r 20 -b bitr_dump | |
| vsniff -h, displays usage | |

| **Interactive Keyboard Options** | |
|---|---|
| u | displays real time updates |
| d | disable real time updates |
| s | to pause analysis and logs statistics |
| g | to start analysis |
| c | to clear stats and continue |
| q | to exit and quit |

| **Defaults** | |
|---|---|
| Using Input NIC 2 and Output NIC 3 vsniff -v -r 20 | |

The Java-enabled GUI of the MPPDA application is operable to provide a user-friendly interface to set up and launch the application for one or more unique monitoring modules. In addition, the GUI is operable to facilitate a graphical interface to view real-time statistics of a number of packet streams by setting the host IP address and associated TCP port number. Thereafter, the user may start capturing data packets by using appropriate GUI control buttons. Further, individual statistics of the data streams the user is interested in can be viewed by selecting appropriate software tabs. As an option, the viewer can display the summary of all data streams being monitored as well.

By way of example, the statistics displayed for each frame type are as follows: (i) frames sent and received; (ii) length values in bytes for the sent and received frames; (iii) number of frames dropped; (iv) percentage number of frames dropped; and (v) percentage length value of frames dropped. Because the multiple data streams are analyzed under control of a unified processing environment that provides a common time base, synchronized monitoring of the various streams is advantageously facilitated, which in turn assists in providing meaningful comparative statistics with respect to the monitored data streams.

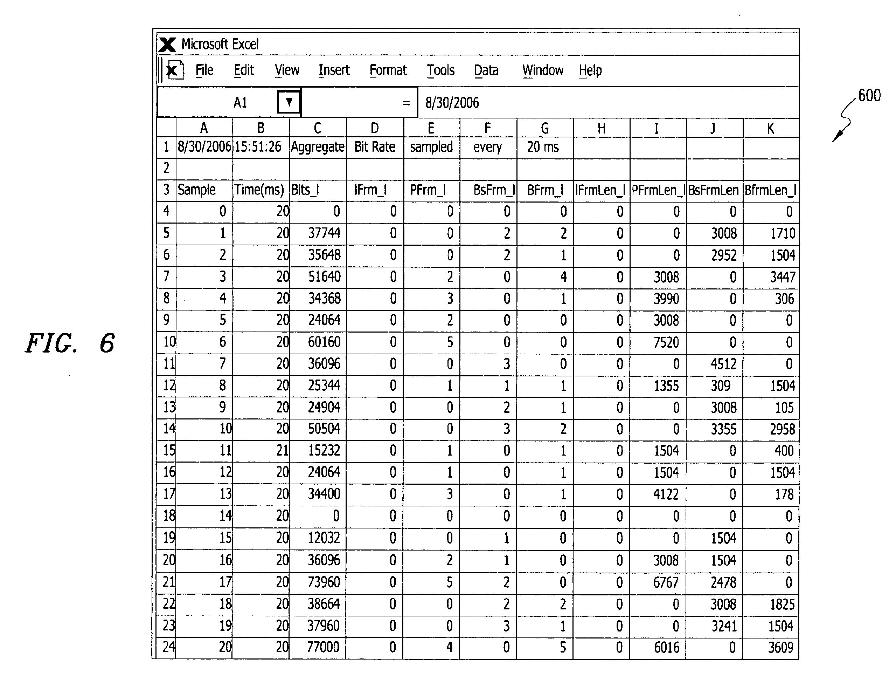

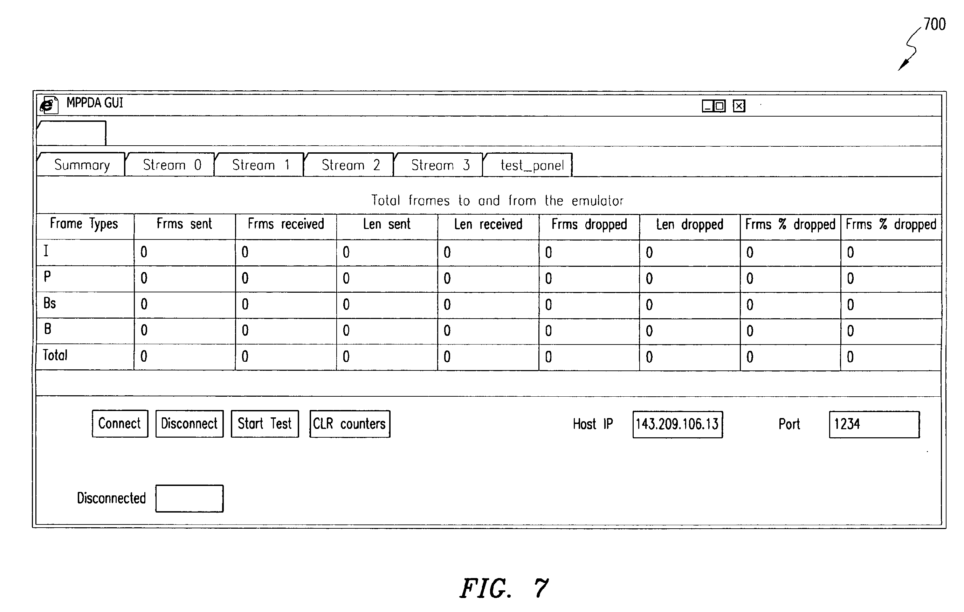

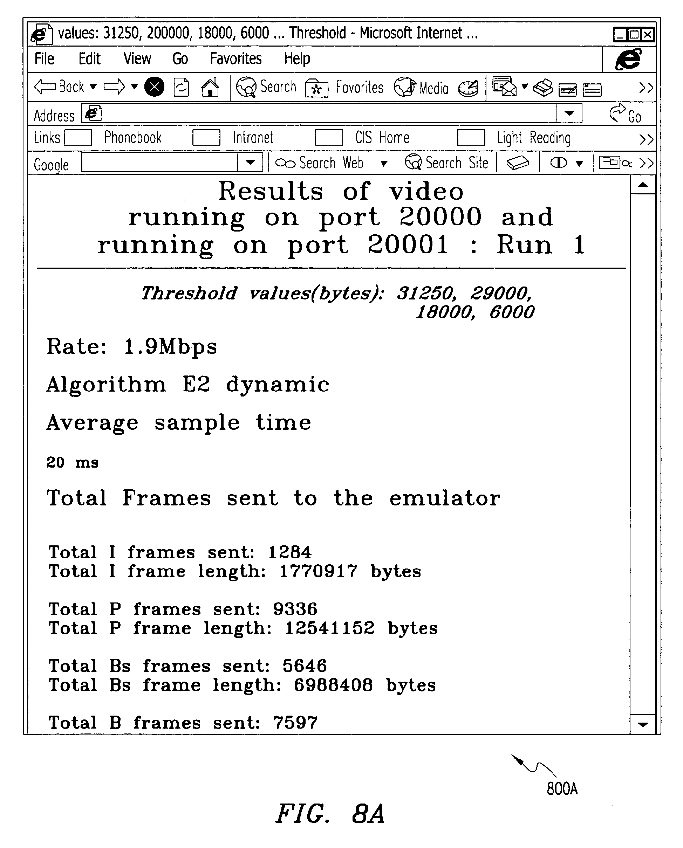

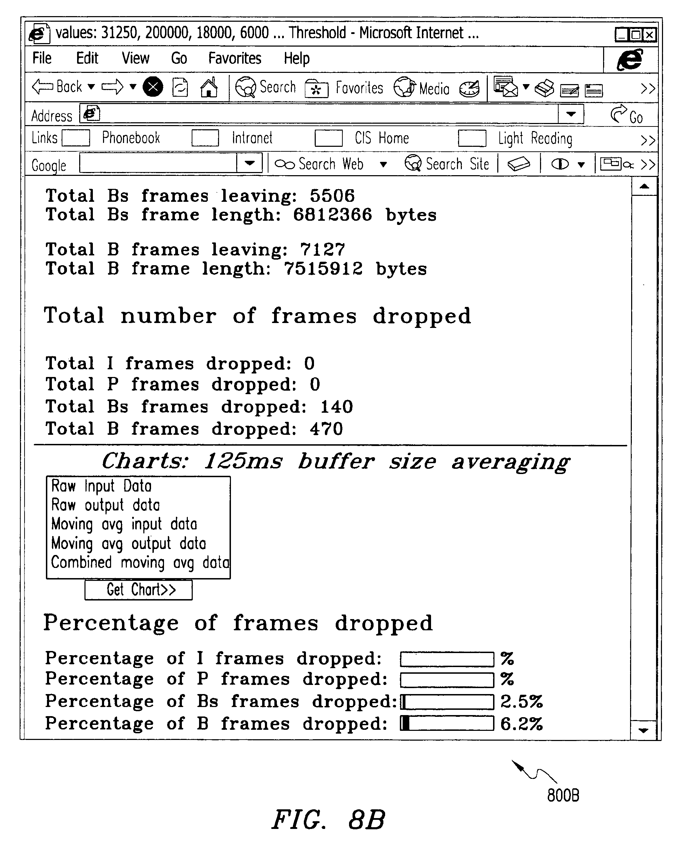

FIGS. 6-7 and 8A-8B depict various exemplary output formats and GUI interface implementations available with an embodiment of a multi-port packet data analyzer. Reference numeral 600 in FIG. 6 refers to an Excel output table in comma separated value (CSV) file format, which may be converted to a suitable Extensible Markup Language (XML) format for further processing. An exemplary GUI interface 700 is illustrated in FIG. 7 which includes software buttons such as CONNECT, DISCONNECT, START TEST, CLR COUNTERS, and the like with respect to monitoring four streams, namely, STREAM 0 through STREAM 3. A SUMMARY tab is operable to provide a pulldown menu for displaying summarized results. FIG. 8A depicts an exemplary stylesheet output 800A available by way of using an Internet browser. FIG. 8B depicts another exemplary stylesheet output 800B that shows additional statistics. One skilled in the art will recognize that the stylesheet outputs may be interactive in some implementations, and may contain detailed measurements such as raw input data, raw output data, moving average input data, moving average output data, or combined moving average data. These measurements may be selected and viewed in a separate browser window by highlighting a particular chart corresponding to the measurement and pressing a GET CHART button. Examples of measurement charts may be seen in the United States provisional patent application entitled: "VSNIFF: VERSATILE SNIFFER: DATA TRAFFIC ANALYZER," Application No.: 60/723,993, filed on October 6, 2005, incorporated by reference hereinabove.

Based on the foregoing discussion, it should be appreciated that the MPPDA application of the present disclosure provides a cost-effective yet highly flexible packet analyzer solution capable of generating statistics on any portion of the data frames being monitored. Because of open software interfacing and abstracted layering of the analysis filter modules, the application tool is not only portable to any standard OS/hardware platform, but also capable of providing configurability, multiple data stream analysis, and multi-tap functionality with respect to a single data stream.

The following features as well as the following apparatus and computer readable medium, separately or in any combination, may also constitute advantageous embodiments of the described or claimed invention:
- The claimed and/or described method, wherein said extracted data packets are examined using packet header and payload information at Layer-3 or a higher layer of a multi-layer Open Systems Interconnection (OSI) architecture implemented with respect to said data transmission environment.
- The claimed and/or described method, wherein said SUT comprises an Ethernet device.
- The claimed and/or described method, wherein said analyzing comprises at least one of a TCP/IP traffic analysis, a bit-rate analysis, a Group of Pictures (GOP) analysis, a frame timing analysis, and a frame drop analysis.
- An apparatus for analyzing data streams in a data transmission environment, comprising: means for capturing data from at least one data stream at two or more taps associated with a system under test (SUT); means for filtering said captured data to extract data packets belonging to one or more data types; means for analyzing extracted data packets of each data type using packet header and payload information of said extracted data packets; and means for outputting results obtained from analyzing said extracted data packets.
- The claimed and/or described apparatus, wherein said at least one data stream comprises data types selected from one of audio data, Internet Protocol Television (IPTV) data, Voice over IP (VoIP) data, Transmission Control Protocol (TCP)/IP data, and User Datagram Protocol (UDP) data.
- The claimed and/or described apparatus, further comprising means for performing one or more statistical tests on said extracted data packets.
- The claimed and/or described apparatus, wherein said means for outputting comprise one of a command line interface (CLI) and a graphic user interface (GUI).
- The claimed and/or described apparatus, wherein said at least one data stream comprises a stream of Ethernet frames and said results comprise at least one of the following: frames sent and received, length values in bytes for the sent and received frames, number of frames dropped, percentage number of frames dropped, and percentage length value of frames dropped.
- The claimed and/or described apparatus, wherein said means for analyzing extracted data packets includes means for examining said extracted data packets using packet header and payload information at Layer-3 or a higher layer of a multi-layer Open Systems Interconnection (OSI) architecture implemented with respect to said data transmission environment.
- The claimed and/or described apparatus, wherein said SUT comprises an Ethernet device.
- The claimed and/or described apparatus, wherein said means for analyzing extracted data packets includes means for performing at least one of a TCP/IP traffic analysis, a bit-rate analysis, a Group of Pictures (GOP) analysis, a frame timing analysis, and a frame drop analysis.
- A computer readable medium having a set of instructions which, when executed by a computer, perform the following: capturing data from at least one data stream at two or more taps associated with a system under test (SUT); filtering said captured data to extract data packets belonging to one or more data types; analyzing extracted data packets of each data type using packet header and payload information of said extracted data packets; and outputting results obtained from analyzing said extracted data packets.
- The claimed and/or described computer readable medium, further comprising instructions for performing one or more statistical tests on said extracted data packets.
- The claimed and/or described computer readable medium, wherein said instructions for analyzing extracted data packets include instructions for examining said extracted data packets using packet header and payload information at Layer-3 or a higher layer of a multi-layer Open Systems Interconnection (OSI) architecture implemented with respect to said data transmission environment.
- The claimed and/or described computer readable medium, wherein said instructions for analyzing extracted data packets include instructions for performing at least one of a TCP/IP traffic analysis, a bit-rate analysis, a Group of Pictures (GOP) analysis, a frame timing analysis, and a frame drop analysis.

It is believed that the operation and construction of the present invention will be apparent from the Detailed Description set forth above. While the exemplary embodiments of the invention shown and described have been characterized as being preferred, it should be readily understood that various changes and modifications could be made therein without departing from the scope of the present invention as set forth in the following claims.

## Claims

1. A method of analyzing data streams in a data transmission environment, comprising:
capturing data from at least one data stream at two or more taps associated with a system under test (SUT); filtering said captured data to extract data packets belonging to one or more data types;
analyzing extracted data packets of each data type using packet header and payload information of said extracted data packets; and
outputting results obtained from analyzing said extracted data packets.

2. The method as recited in claim 1, wherein said at least one data stream comprises data types selected from one of audio data, Internet Protocol Television (IPTV) data, Voice over IP (VoIP) data, Transmission Control Protocol (TCP)/IP data, and User Datagram Protocol (UDP) data.

3. The method as recited in claim 1, further comprising performing one or more statistical tests on said extracted data packets.

4. The method as recited in claim 1, wherein said results are provided via one of a command line interface (CLI) and a graphic user interface (GUI).

5. The method as recited in claim 1, wherein said at least one data stream comprises a stream of Ethernet frames and said results comprise at least one of the following: frames sent and received, length values in bytes for the sent and received frames, number of frames dropped, percentage number of frames dropped, and percentage length value of frames dropped.

6. A multi-port packet data analyzer, comprising:
a plurality of network interface card (NIC) drivers, each operating to receive a packet data stream from a hardware port of a system under test (SUT);
a plurality of packet capture filters corresponding to said plurality of NIC drivers; and
a plurality of software modules, each for performing a particular analysis on data packets extracted from a packet data stream based on content of said data packets,
wherein said software modules are executable as multi-threaded objects in a processor and associated Operating System (OS) environment, each of said software modules having an interface to a corresponding packet capture filter and associated buffer disposed in said OS's kernel.

7. The multi-port packet data analyzer as recited in claim 6, further comprising a software module for performing one or more statistical tests on said extracted data packets.

8. The multi-port packet data analyzer as recited in claim 6, wherein said software modules are operable to analyze said extracted data packets using packet header and payload information at Layer-3 or a higher layer of a multi-layer Open Systems Interconnection (OSI) architecture implemented with respect to said SUT.

9. The multi-port packet data analyzer as recited in claim 6, wherein said software modules are operable to perform at least one of a TCP/IP traffic analysis, a bit-rate analysis, a Group of Pictures (GOP) analysis, a frame timing analysis, and a frame drop analysis.

10. The multi-port packet data analyzer as recited in claim 6, further comprising at least one of a graphical user interface (GUI) or a command line interface (CLI) for outputting results obtained from performing said particular data analysis.
